(19) Europäisches Patentamt / European Patent Office / Office européen des brevets

(11) **EP 2 722 967 A1**

(12) **EUROPEAN PATENT APPLICATION**
published in accordance with Art. 153(4) EPC

(43) Date of publication:
**23.04.2014 Bulletin 2014/17**

(21) Application number: **12800882.8**

(22) Date of filing: **11.05.2012**

(51) Int Cl.:
$H02J\ 17/00$ (2006.01)   $B60L\ 5/00$ (2006.01)
$B60L\ 11/18$ (2006.01)   $B60M\ 7/00$ (2006.01)
$H01M\ 10/46$ (2006.01)   $H02J\ 7/00$ (2006.01)

(86) International application number:
**PCT/JP2012/062179**

(87) International publication number:
**WO 2012/172899 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2011  JP 2011135390**
**09.08.2011  JP 2011174155**

(71) Applicant: **Kabushiki Kaisha Toyota Jidoshokki Kariya-shi, Aichi 448-8671 (JP)**

(72) Inventors:
• TAGUCHI, Yuichi
  Kariya-shi
  Aichi 448-8671 (JP)
• YAMAGUCHI, Atsushi
  Kariya-shi
  Aichi 448-8671 (JP)

(74) Representative: **TBK**
**Bavariaring 4-6**
**80336 München (DE)**

(54) **RESONANCE-TYPE NON-CONTACT POWER SUPPLY SYSTEM**

(57)   A resonance-type non-contact power supply system is configured such that a power supply section is changeable in output frequency, and has an impedance measuring means (impedance measuring section) that measures the input impedance of a resonant system. The power supply system includes a control means (control section) that performs control for transmitting proper power to power receiving equipment after changing the output frequency ($f_o$) of the power supply section to lie within one of the frequency ranges $f_1 \le f_o \le f_2$, $f_3 \le f_o \le f4$, $\cdots$, $f_{2n-1} \le f_o \le f_{2n}$. The frequencies $f_1, f_2, f_3, f_4, \cdots, f_{2n-1}, f_{2n}$ ($f_1 < f_2 < f_3 < \cdots < f_{2n-1} < f_{2n}$) are defined such that, if the input impedances of the resonant system at the time of supply of power of the frequencies $f_1, f_2, f_3, f_4, \cdots, f_{2n-1}, f_{2n}$ ($f_1 < f_2 < f_3 < \cdots < f_{2n-1} < f_{2n}$) to the resonant system are represented by $Z_1, Z_2, Z_3, \cdots, Z_{2n-1}, Z_{2n}$, the input impedances satisfy $Z_1 = Z_2, Z_3 = Z_4, \cdots, Z_{2n-1} = Z_{2n}$.

**Fig.1**

EP 2 722 967 A1

**Description**

TECHNICAL FIELD

The present invention relates to a resonance-type non-contact power supply system.

BACKGROUND ART

Magnetic field resonance-based power transmission has conventionally been proposed (see Patent Document 1, for example). Patent Document 1, however, discloses no specific method of identifying the resonant frequency of a resonant system for magnetic field resonance. It has therefore been difficult to design and manufacture resonance-type non-contact power supply systems that transmit power efficiently. There has hence been proposed an easy-to-design and easy-to-manufacture non-contact power transmission apparatus (see Patent Document 2, for example). In the non-contact power transmission apparatus disclosed in Patent Document 2, the relationship between the input impedance and the frequency of a resonant system is put on a graph and. Based on this, the frequency of an AC power source is set between a frequency at which the input impedance takes a local maximum value and a frequency that is higher than the frequency at which the input impedance takes the local maximum value and at which the input impedance takes a local minimum value.

PRIOR ART DOCUMENTS

Patent Documents

     Patent Document 1: International Publication No. 2007/008646
     Patent Document 2: Japanese Laid-Open Patent Publication No. 2010-114964

SUMMARY OF THE INVENTION

Problems that the Invention is to Solve

The apparatus disclosed in Patent Document 2 does not take into consideration load fluctuation on the power receiving side. However, since magnetic field resonance-based power transmission may undergo a change in the resonant frequency of the resonant system due to load change, it is necessary to deal with to such a change in the resonant frequency of the resonant system due to load change.

It is hence an objective of the present invention to provide an easy-to-design and easy-to-manufacture resonance-type non-contact power supply system in which power can be supplied efficiently from a power source section to even a fluctuating load.

Means for Solving the Problems

To achieve the foregoing objective and in accordance with one aspect of the present invention, a resonance-type non-contact power supply system is provided that includes power supply equipment and power receiving equipment. The power supply equipment includes a power source section and a primary resonance coil configured to be supplied with power from the power source section. The power receiving equipment includes a secondary resonance coil configured to receive power from the primary resonance coil by magnetic field resonance and a load configured to be supplied with power received at the secondary resonance coil. At least the primary resonance coil, the secondary resonance coil, and the load constitute a resonant system. The power source section is configured to be changeable in output frequency. The resonance-type non-contact power supply system further includes an impedance measuring means for measuring an input impedance of the resonant system and a control means that performs control for transmitting proper power to the power receiving equipment after changing the output frequency $f_o$ of the power source section to lie within one of the frequency ranges $f_1 \leq f_o \leq f_2$, $f_3 \leq f_o \leq f_4$, $\cdots$, $t_{2n-1} \leq f_o \leq f_{2n}$. The frequencies $f_1, f_2, f_3, f_4, \cdots, t_{2n-1}, f_{2n}$ ($f_1 < f_2 < f_3 < \cdots < f_{2n-1} < f_{2n}$) are defined such that, if the input impedances of the resonant system at the time of supply of power of the frequencies $f_1, f_2, f_3, f_4, \cdots, f_{2n-1}, f_{2n}$ ($f_1 < f_2 < f_3 < \cdots < f_{2n-1} < f_{2n}$) to the resonant system are represented by $Z_1$, Z2, $Z_3$, $\cdots$, $Z_{2n-1}, Z_{2n}$, the input impedances satisfy $Z_1 = Z_2$, $Z_3 = Z_4$, $\cdots$, $Z_{2n-1} = Z_{2n}$. The "proper power transmission" here means transmitting power to the power receiving equipment in a state in which the output frequency $f_o$ of the power source section satisfies the condition above, not including power transmission to the power receiving equipment in a preparatory stage until the output frequency $f_o$ is set to satisfy the condition.

The resonance-type non-contact power supply system of this aspect is based on the finding of the inventors of the present invention that, if the input impedances of the resonant system are represented by $Z_1, Z_2, Z_3, \cdots, Z_{2n-1}, Z_{2n}$ when the resonant system is supplied with power of the different frequencies $f_1, f_2, f_3, \cdots, f_{2n-1}, f_{2n}$ ($f_1 < f_2 < f_3 < \cdots < f_{2n-1} < f_{2n}$) from the power source section, "some of the frequencies satisfy $Z_1 = Z_2$, $Z_3 = Z_4$, $\cdots$, $Z_{2n-1} = Z_{2n}$ and the resonant frequencies $f_{o1}, f_{o2}, f_{o3}, \cdots, f_{o2n-1}, f_{o2n}$ of the resonant system lie within the respective frequency ranges $f_1 \leq f_{o1} \leq f_2$, $f_3 \leq f_{o2} \leq f_4$, $\cdots$, $f_{2n-1} \leq f_{on} \leq f_{2n}$." The "resonant frequency" here means the frequency at which the power transmission efficiency is maximized in the resonant system.

In this aspect, power transmission is performed with the output frequency of the power source section being equal to the resonant frequency or lying within a range deviating from the resonant frequency by a preset value, and the impedance measuring means measures the input impedances $Z_1, Z_2, Z_3, \cdots, Z_{2n-1}, Z_{2n}$ of the res-

onant system by changing the output frequency of the power source section to be $f_1, f_2, f_3, \cdots, f_{2n-1} < f_{2n}$ ($f_1 < f_2 < f_3 < \cdots < f_{2n-1} < f_{2n}$). The control means performs control in which the control means determines the frequencies at which the input impedances satisfy $Z_1 = Z_2, Z_3 = Z_4, \cdots, Z_{2n-1} = Z_{2n}$. Based on the result of the determination, the control means changes the output frequency $f_o$ of the power source section to lie within one of the frequency ranges $f_1 \leq f_o \leq f_2, f_3 \leq f_o \leq f_4, \cdots, f_{2n-1} \leq f_o \leq f_{2n}$, and then causes the power supply equipment to perform the proper power transmission to the power receiving equipment at the output frequency. The output frequency $f_o$ of the power source section, if it lies within one of the ranges above, becomes equal to or deviates only slightly from the resonant frequency of the resonant system from the finding of the inventor of this application. It is therefore possible to supply power efficiently from the power source section to the load of the power receiving equipment even if the load fluctuates. In addition, the resonance-type non-contact power supply system can be designed and manufactured easily.

In accordance with another aspect of the present invention, at least one of the power supply equipment and the power receiving equipment is provided with an induction coil configured to supply power received from the power source section to the primary resonance coil by electromagnetic induction or with an induction coil configured to draw power received at the secondary resonance coil by electromagnetic induction. At least the induction coil, the primary resonance coil, the secondary resonance coil, and the load constitute the resonant system.

The resonance-type non-contact power supply system is only required to include at least two resonance coils, that is, the primary and secondary resonance coils to provide non-contact power supply between the power supply equipment and the power receiving equipment. However, adjustment to a matching state can be made more easily by providing at least one of an induction coil configured to supply power received from the power source section to the primary resonance coil by electromagnetic induction and an induction coil configured to draw power received at the secondary resonance coil by electromagnetic induction. Further, adjustment to the matching state can be made even more easily by providing all of the primary resonance coil, the secondary resonance coil, and the two induction coils.

In accordance with another aspect of the present invention, the control means is configured to perform control in which the control means determines the frequencies $f_1, f_2, f_3, \cdots, f_{2n-1}, f_{2n}$ ($f_1 < f_2 < f_3 < \cdots < f_{2n-1} < f_{2n}$) prior to the proper power transmission from the power supply equipment. Based on the result of the determination, the control means selects one of the frequency ranges $f_1 \leq f_o \leq f_2, f_3 \leq to \leq f_4, \cdots, f_{2n-1} \leq f_o \leq f_{2n}$ for the output frequency $f_o$ of the power source section to lie within and accordingly changes the output frequency of the power source section. The control means starts the proper power transmission. Thereafter, based on the result of a measurement by the impedance measuring means, the control means determines whether or not the output frequency $f_o$ deviates from the selected range. If the frequency deviates, the control means determines frequencies $f_{1'}, f_{2'}, f_{3'}, \cdots, f_{2n-1'}, f_{2n'}$ ($f_{1'} < f_{2'} < f_{3'} < \cdots < f_{2n-1'} < f_{2n'}$). Based on the result of the determination, the control means selects one of the frequency ranges $f_{1'} \leq f_o \leq f_{2'}, f_{3'} \leq f_o \leq f_{4'}, \cdots, f_{2n-1'} \leq f_o \leq f_{2n'}$ for the output frequency $f_o$ of the power source section to lie within, accordingly changes the output frequency of the power source section, and then performs the proper power transmission. The frequencies $f_{1'}, f_{2'}, f_{3'}, \cdots, f_{2n-1'}, f_{2n'}$ are defined such that, if the input impedances of the resonant system at the time of supply of power of the frequencies $f_{1'}, f_{2'}, f_{3'}, \cdots, f_{2n-1'}, f_{2n'}$ to the resonant system are represented by $Z_{1'}, Z_{2'}, Z_{3'}, \cdots, Z_{2n-1'}, Z_{2n'}$, the input impedances satisfy $Z_{1'} = Z_{2'}, Z_{3'} = Z_{4'}, \cdots, Z_{2n-1'} = Z_{2n'}$.

If the resonant system had a constant resonant frequency, power transmission could be performed efficiently by once setting the output frequency of the power source section equal to the resonant frequency of the resonant system. However, since the power receiving equipment may involve a load fluctuation during power reception and accordingly the resonant frequency may change, such a constant output frequency of the power source section could deviate from the resonant frequency to result in a reduction in the power transmission efficiency. In the present invention, however, even if the resonant frequency of the resonant system may change due to load fluctuation during charging, the output frequency $f_o$ of the power source section also changes, in response to the change in the resonant frequency, to lie within a range in which power transmission is performed efficiently. Power transmission can thus be performed efficiently even under a large load fluctuation.

In accordance with yet another aspect of the present invention, the power receiving equipment is built in a vehicle and the vehicle includes a rectifier and a battery as the load. If the power receiving equipment is built in a vehicle and the vehicle includes a battery as the load, the resonant frequency of the resonant system may change due to an increased load fluctuation during power transmission and/or a state of the vehicle when stopped for power reception (charging). In the present invention, however, even if the resonant frequency of the resonant system may change, the control means changes the output frequency $f_o$ of the power source section to achieve efficient power transmission.

EFFECTS OF THE INVENTION

The present invention thus provides an easy-to-design and easy-to-manufacture resonance-type non-contact power supply system in which power can be supplied efficiently from a power source section to even a fluctuating load.

BRIEF DESCRIPTION OF THE DRAWINGS

Fig. 1 is a configuration diagram of a resonance-type non-contact charging system according to a first embodiment;

Fig. 2 is a circuit diagram partially showing the system of Fig. 1;

Fig. 3 is a graph showing the relationship between the real part and the imaginary part of input impedances when power is supplied at different frequencies;

Fig. 4 is a graph showing the relationship between the output frequency of a high-frequency power source and the power transmission efficiency;

Fig. 5 is a circuit diagram partially showing a resonance-type non-contact charging system according to a second embodiment;

Fig. 6 is a graph showing the relationship between the real part and the imaginary part of input impedances when power is supplied at different frequencies; and

Fig. 7 is a graph showing the relationship between the output frequency of a high-frequency power source and the power transmission efficiency.

MODES FOR CARRYING OUT THE INVENTION

First Embodiment

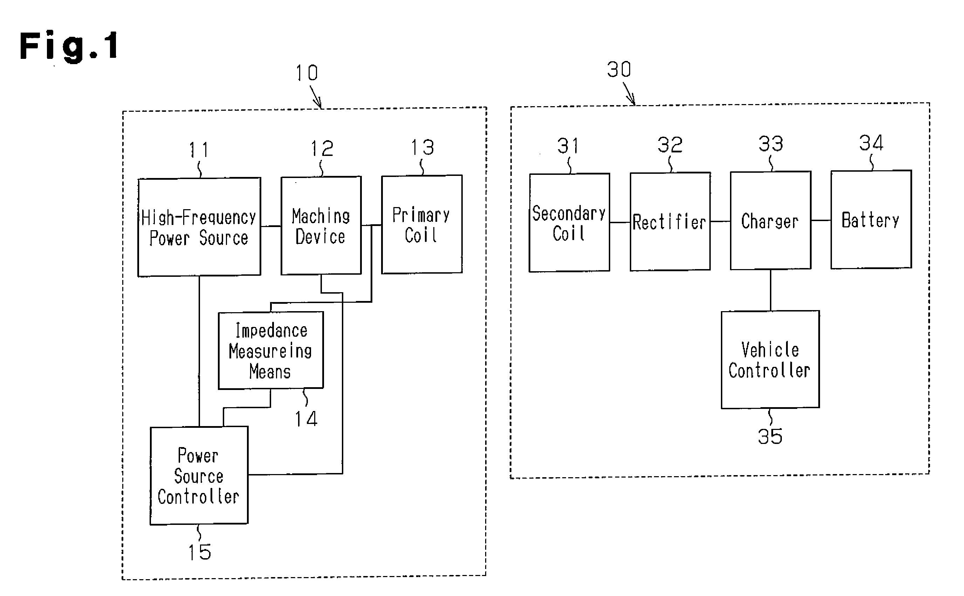

A resonance-type non-contact charging system for charging an in-vehicle battery according to a first embodiment of the present invention will hereinafter be described with reference to Figs. 1 to 4.

As shown in Fig. 1, the resonance-type non-contact charging system, which serves as a resonance-type non-contact power supply system, includes power supply equipment 10 installed on the ground and power receiving equipment 30 built in a vehicle serving as a mobile unit.

The power supply equipment 10 includes a high-frequency power source 11 serving as a power source section, a matching device 12 connected to an output part of the high-frequency power source 11, a primary coil 13, an impedance measuring means (impedance measuring section) 14, and a power source controller 15. A power measuring device and a phase measuring device are used as the impedance measuring means 14.

The power receiving equipment includes a secondary coil 31, a rectifier 32, a charger 33, a battery (secondary battery) 34 connected to the charger 33, and a vehicle controller 35. The rectifier 32, the charger 33, and the battery 34 constitute a load.

The matching device 12, the primary coil 13, the secondary coil 31, and the load (the rectifier 32, the charger 33, and the battery 34) constitute a resonant system. The resonant frequency of the resonant system changes according to the value of power supplied to the battery 34. The vehicle controller 35 is capable of checking the value of power supplied to the battery 34 by receiving a detection signal from a detecting means (a detecting section, that is, a power detecting means or a power detecting section, which is not shown) for detecting the value of power supplied to the battery 34. The power source controller 15 and the vehicle controller 35 are capable of communicating via a radio communication device (not shown), and the power source controller 15 is configured to acquire state-of-charge information from the vehicle controller 35.

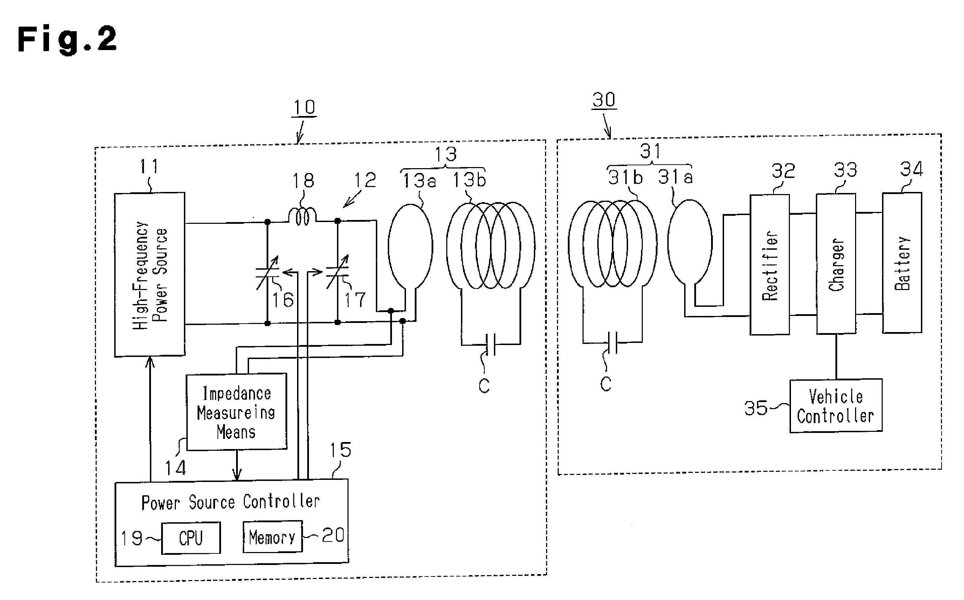

As shown in Fig. 2, the primary coil 13 includes a primary induction coil 13a and a primary resonance coil 13b. The primary induction coil 13a is connected to the high-frequency power source 11 via the matching device 12. The primary induction coil 13a and the primary resonance coil 13b are arranged coaxially, and a capacitor C is connected to the primary resonance coil 13b. The primary induction coil 13a is coupled with the primary resonance coil 13b by electromagnetic induction, so that AC power supplied from the high-frequency power source 11 to the primary induction coil 13a is supplied to the primary resonance coil 13b by electromagnetic induction. The impedance measuring means 14 is connected to the primary induction coil 13a of the primary coil 13 and configured to output a detection signal to the power source controller 15.

The secondary coil 31 includes a secondary induction coil 31 a and a secondary resonance coil 31 b. The secondary induction coil 31 a and the secondary resonance coil 31 b are arranged coaxially, and a capacitor C is connected to the secondary resonance coil 31 b. The secondary induction coil 31 a is coupled with the secondary resonance coil 31 b by electromagnetic induction, so that AC power supplied resonantly from the primary resonance coil 13b to the secondary resonance coil 31 b is supplied to the secondary induction coil 31 a by electromagnetic induction. The secondary induction coil 31 a is connected to a rectifier 32. In this embodiment, the primary resonance coil 13b and the secondary resonance coil 31 b are formed in the same configuration and the capacitors C have the same capacitance.

As shown in Fig. 2, the matching device 12 includes two variable capacitors 16 and 17 and an inductor 18. The variable capacitor 16 is connected to the high-frequency power source 11, while the variable capacitor 17 is connected in parallel to the primary induction coil 13a. The inductor 18 is connected between the variable capacitors 16 and 17. The impedance of the matching device 12 changes with a change in the capacitance of the variable capacitors 16 and 17. The matching device 12 is controlled by the power source controller 15.

The high-frequency power source 11 is configured to be changeable in the output frequency and to output AC power of an output frequency indicated by a command signal from the power source controller 15.

The impedance measuring means 14 is connected to the primary induction coil 13a of the primary coil 13 to measure the input impedance of the resonant system. The impedance measuring means 14 is configured to output a detection signal to the power source controller 15.

A control program for setting the output frequency of the high-frequency power source 11 to be equal to the resonant frequency of the resonant system or to lie within a range deviating from the resonant frequency by a preset value is stored in a memory 20. A CPU 19 is provided to compute a range within which the resonant frequency of the resonant system lies based on a detection signal from the impedance measuring means 14 and to set the output frequency of the high-frequency power source 11. In more detail, the CPU reads, as an input detection signal from the impedance measuring means 14, the input impedance $Z_1, Z_2, Z_3, \cdots, Z_{2n-1}, Z_{2n}$ of the resonant system by changing the output frequency of the high-frequency power source 11 to be $f_1, f_2, f_3, \cdots, f_{2n-1}, f_{2n}$ ($f_1 < f_2 < f_3 < \cdots < f_{2n-1} < f_{2n}$) and determines the frequencies at which the input impedances satisfy $Z_1 = Z_2, Z_3 = Z_4, \cdots, Z_{2n-1} = Z_{2n}$. Based on the result, the CPU 19 then sets the output frequency $f_o$ of the high-frequency power source 11 to lie within one of the frequency ranges $f_1 \leq f_{o1} \leq f_2, f_3 \leq f_{o2} \leq f_4, \cdots, f_{2n-1} \leq f_{on} \leq f_{2n}$ that the resonant frequencies $f_{o1}, f_{o2}, f_{o3}, \cdots, f_{on}$ should satisfy. That is, the CPU 19 changes the output frequency $f_o$ of the high-frequency power source 11 to lie within one of the frequency ranges $f_1 \leq f_o \leq f_2, f_3 \leq f_o \leq f_4, \cdots, f_{2n-1} \leq f_o \leq f_{2n}$, and then causes the power supply equipment 10 to transmit proper power to the power receiving equipment 30.

The above method of setting the output frequency $f_o$ is based on the following finding of the inventor of this application: in such a resonance-type non-contact power supply system, if the input impedances of the resonant system are represented by $Z_1, Z_2, Z_3, \cdots, Z_{2n-1}, Z_{2n}$ when supplied with power of the different frequencies $f_1, f_2, f_3, \cdots, f_{2n-1}, f_{2n}$ ($f_1 < f_2 < f_3 < \cdots < f_{2n-1} < f_{2n}$) from the high-frequency power source 11, "there are the frequencies at which the impedances satisfy $Z_1 = Z_2, Z_3 = Z_4, \cdots, Z_{2n-1} = Z_{2n}$ and the resonant frequencies $f_{o1}, f_{o2}, f_{o3}, \cdots, f_{on}$ of the resonant system lie within the respective frequency ranges $f_1 \leq f_{o1} \leq f_2, f_3 \leq f_{o2} \leq f_4, \cdots, f_{2n-1} \leq f_{on} \leq f_{2n}$." In addition, for the impedance $Z_i = R_i + jX_i$, $Z_1 = Z_2$ means $R_1 = R_2$ and $X_1 = X_2$.

Next will be described support for the finding above.

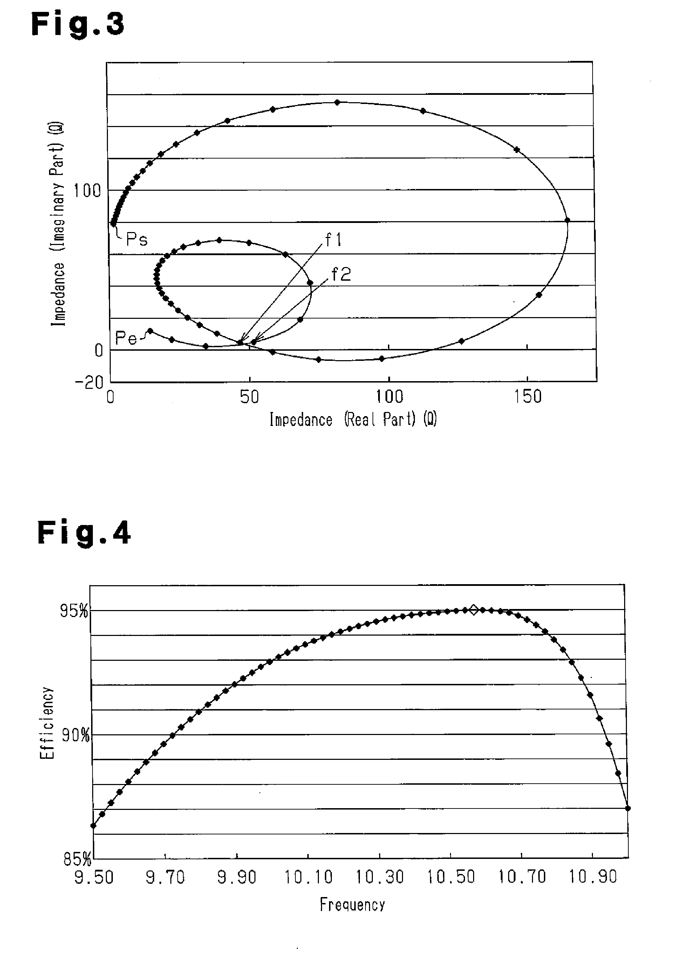

Fig. 3 shows the relationship between the real part and the imaginary part of input impedances of a resonant system measured by changing the output frequency of a common high-frequency power source having a fixed output impedance of 50 Ω within the range from 9.50 MHz to 11.00 MHz. The output frequency was changed incrementally by 0.025 MHz from 9.50 MHz. In addition, in Fig. 3, the point Ps corresponds to an output frequency of 9.50 MHz and the point Pe corresponds to an output frequency of 11.00 MHz.

As shown in Fig. 3, the input impedance of the resonant system did not change monotonically with the increase in the output frequency of the high-frequency power source, but increased both in the real part and the imaginary part with the increase in the frequency within the range from 9.50 to 10.10 MHz, and then increased in the real part but decreased in the imaginary part with the increase in the frequency to 10.18 MHz. With a further increase in the frequency, the input impedance changed to decrease both in the real part and the imaginary part, decrease in the real part but increase in the imaginary part, increase both in the real part and the imaginary part, increase in the real part but decrease in the imaginary part, decrease both in the real part and the imaginary part, and decrease in the real part but increase in the imaginary part.

In Fig. 3, the input impedance $Z_1$ at the point $f_1$ is approximately equal to the input impedance $Z_2$ at the point $f_2$.

$$f_1 = 10.325 \text{ MHz}, Z_1 = 46.7 + j4.69$$

$$f_2 = 10.925 \text{ MHz}, Z_2 = 51.6 + j4.85$$

$Z_1 = Z_2$ did not hold strictly because the data acquisition in the experiment was not fine, but acquiring data more finely than the 0.025 MHz interval for the increase in the output frequency of the high-frequency power source is predicted to result in that the lower one $f_1$ and the higher one $f_2$ of the frequencies corresponding to the intersection of the curve shown in Fig. 3 satisfy $Z_1 = Z_2$.

Fig. 4 shows a result of a measurement of the power transmission efficiency at different output frequencies of the high-frequency power source changed within the range from 9.5 to 11.0 MHz. From Fig. 4, the frequency of 10.575 MHz, at which the power transmission efficiency was maximized (95.05%) in the resonant system, is defined as the resonant frequency $f_{o1}$ of the resonant system. The resonant frequency $f_{o1}$ (10.575 MHz) lies between $f_1$ (10.325 MHz) and $f_2$ (10.925 MHz) to satisfy the relationship $f_1 \leq f_{o1} \leq f_2$.

To confirm that no frequency at which the power transmission efficiency was maximized lies outside the range between $f_1$ and $f_2$, the power transmission efficiency was measured at different output frequencies of the high-frequency power source changed within the range from 9.5 to 11.0 MHz. As a result, it was confirmed that the frequency at which the power transmission efficiency was maximized lay only between $f_1$ and $f_2$.

Next will be described the behavior of the thus configured resonance-type non-contact charging system.

The in-vehicle battery 34 is to be charged when the vehicle is stopped at a predetermined position near the power supply equipment 10. The vehicle controller 35 sends a charge request signal to the power source controller 15. The vehicle controller 35 also checks the state-of-charge (SOC) of the battery 34 and sends the information to the power source controller 15.

The power source controller 15 (CPU 19) acknowledges the charge request signal and then performs matching in the matching device 12. Next, the CPU 19 sets the output frequency of the high-frequency power source 11 as follows prior to proper power transmission from the power supply equipment 10. The "proper power transmission" means transmitting power to the power receiving equipment 30 in a state in which the output frequency $f_o$ of the high-frequency power source 11 satisfies the relationship $f_1 \leq f_o \leq f_2$, where the frequencies $f_1$ and $f_2$ satisfy the relationship $f_1 \leq f_{01} \leq f_2$, which has been set in the above described manner.

The CPU 19 first reads, as an input detection signal from the impedance measuring means 14, the input impedance $Z_1$, $Z_2$, $Z_3$, $\cdots$, $Z_{2n-1}$, $Z_{2n}$ of the resonant system by changing the output frequency of the high-frequency power source 11 to be $f_1$, $f_2$, $f_3$, $\cdots$, $f_{2n-1}$, $f_{2n}$ ($f_1 < f_2 < f_3 < \cdots < f_{2n-1} < f_{2n}$) and determines the frequencies at which the input impedances satisfy $Z_1 = Z_2$, $Z_3 = Z_4$, $\cdots$, $Z_{2n-1} = Z_{2n}$. Based on the result, the CPU 19 then sets the output frequency $f_o$ of the high-frequency power source 11 to lie within one of the frequency ranges $f_1 \leq f_{o1} \leq f_2$, $f_3 \leq f_{o2} \leq f_4$, $\cdots$, $f_{2n-1} \leq f_{on} \leq f_{2n}$ that the resonant frequencies $f_{o1}$, $f_{o2}$, $f_{o3}$, $\cdots$, $f_{on}$ should satisfy. The CPU 19 changes the output frequency $f_o$ of the high-frequency power source 11 to lie within one of the thus set frequency ranges, for example, $f_1 \leq f_o \leq f_2$ and then starts the proper power transmission.

High-frequency power is then output from the high-frequency power source 11 to the primary induction coil 13a at the set frequency, which in turn causes a magnetic field to be generated by electromagnetic induction around the power-supplied primary induction coil 13a. The magnetic field is enhanced through the magnetic field resonance between the primary resonance coil 13b and the secondary resonance coil 31 b. From the enhanced magnetic field in the vicinity of the secondary resonance coil 31 b, AC power is drawn by electromagnetic induction through the secondary induction coil 31 a and rectified through the rectifier 32, and thereafter the charger 33 charges the battery 34.

The CPU 19 receives an input detection signal from the impedance measuring means 14 at predetermined intervals and, based on the measurement result, determines whether or not the output frequency $f_o$ deviates from the selected range, that is, whether or not the output frequency $f_o$ satisfies $f_1 \leq f_o \leq f_2$. If the output frequency $f_o$ deviates from the selected range, the CPU 19 determines frequencies $f_{1'}$, $f_{2'}$, $f_{3'}$, $\cdots$, $f_{2n-1'}$, $f_{2n'}$ ($f_{1'} < f_{2'} < f_{3'} < \cdots < f_{2n-1'} < f_{2n'}$) and, based on the result, selects one of the frequency ranges $f_{1'} \leq f_o \leq f_{2'}$, $f_{3'} \leq f_o \leq f_{4'}$, $\cdots$, $f_{2n-1'} \leq f_o$ $f_{2n'}$ for the output frequency $f_o$ of the high-frequency power source 11 to lie within and accordingly changes the output frequency of the high-frequency power source 11 and then performs the proper power transmission. The frequencies $f_{1'}$, $f_{2'}$, $f_{3'}$, $\cdots$, $f_{2n-1'}$, $f_{2n'}$ are defined such that, if the input impedances of the resonant system at the time of supply of power of the frequencies $f_{1'}$, $f_{2'}$, $f_{3'}$, $\cdots$, $f_{2n-1'}$, $f_{2n'}$ to the resonant system are represented by $Z_{1'}$, $Z_{2'}$, $Z_{3'}$, $\cdots$, $Z_{2n-1'}$, $Z_{2n'}$, the input impedances satisfy $Z_{1'} = Z_{2'}$, $Z_{3'} = Z_{4'}$, $\cdots$, $Z_{2n-1'} = Z_{2n'}$.

When the battery 34 becomes fully charged, the vehicle controller 35 stops charging by the charger 33 and sends a charge termination signal to the power source controller 15. Even before the battery reaches full charge, when the driver inputs a charge stop command, for example, the vehicle controller 35 stops charging by the charger 33 and sends a charge termination signal to the power source controller 15. Receiving the charge termination signal, the power source controller 15 terminates the power transmission (power supply).

This embodiment offers the following advantages.

(1) In the resonance-type non-contact charging system, the power source section (high-frequency power source 11) is configured to be changeable in the output frequency, and the impedance measuring means 14 is provided to measure the input impedance of the resonant system. The control means (control section, that is, the CPU 19) performs control to change the output frequency $f_o$ of the high-frequency power source 11 to lie within one of the frequency ranges $f_1 \leq f_o \leq f_2$, $f_3 \leq f_o \leq f_4$, $\cdots$, $f_{2n-1} \leq f_o \leq f_{2n}$, and then transmit proper power to the power receiving equipment 30. If the input impedances of the resonant system are represented by $Z_1$, $Z_2$, $Z_3$, $\cdots$, $Z_{2n-1}$, $Z_{2n}$, the frequencies $f_1$, $f_2$, $f_3$, $f_4$, $\cdots$, $f_{2n-1}$, f2n ($f_1 < f_2 < f_3 < \cdots < f_{2n-1} < f_{2n}$) are defined as values at which the input impedances satisfy $Z_1 = Z_2$, $Z_3 = Z_4$, $\cdots$, $Z_{2n-1} = Z_{2n}$. It is therefore possible to supply power efficiently from the high-frequency power source 11 to the load of the power receiving equipment 30 even if the load fluctuates. In addition, the resonance-type non-contact power supply system can be designed and manufactured easily.

(2) The control means (CPU 19) determines the frequencies $f_1$, $f_2$, $f_3$, $\cdots$, $f_{2n-1}$, $f_{2n}$ ($f_1 < f_2 < f_3 < \cdots < f_{2n-1} < f_{2n}$) prior to proper power transmission from the power supply equipment 10 and, based on the result, selects one of the frequency ranges f1 $\leq f_o \leq f_2$, $f_3 \leq f_o$ $f_4$, $\cdots$, $f_{2n-1} \leq f_o \leq f_{2n}$ for the output frequency fo of the high-frequency power source 11 to lie within and accordingly changes the output frequency of the high-frequency power source 11, and then starts the proper power transmission. Thereafter, based on the result of a measurement by the impedance measuring means 14, the control means determines at predetermined intervals whether or not the output frequency $f_o$ deviates from the selected range and, if the frequency deviates, determines frequencies $f_1$, $f_{2'}$, $f_{3'}$, $\cdots$, $f_{2n-1'}$, $f_{2n'}$ ($f_{1'} < f_{2'} < f_{3'} < \cdots < f_{2n-1'} < f_{2n'}$) and, based on the result, selects one of the frequency ranges $f_{1'} \leq f_o \leq f_{2'}$, $f_{3'} \leq f_o \leq f_{4'}$, $\cdots$, $f_{2n-1'} \leq f_o f_{2n'}$ for the output frequency $f_o$ of the high-frequency power source 11 to lie within and accordingly changes the output frequency of the high-frequency power source 11, and then performs the proper power transmission. The frequencies $f_{1'}$, $f_{2'}$, $f_{3'}$, $\cdots$, $f_{2n-1'}$, $f_{2n'}$ are defined such that, if the input impedances of the resonant system at the time of supply of power of the frequencies $f_{1'}$, $f_{2'}$, $f_{3'}$, $\cdots$, $f_{2n-1'}$, $f_{2n'}$ to the resonant system are represented by $Z_{1'}$, $Z_{2'}$, $Z_{3'}$, $\cdots$, $Z_{2n-1'}$, $Z_{2n'}$, the input impedances satisfy $Z_{1'} = Z_{2'}$, $Z_{3'} = Z_{4'}$, $\cdots$, $Z_{2n-1'} = Z_{2n'}$.

If the power receiving equipment 30 involves a load fluctuation during power reception, the resonant frequency changes accordingly and a constant output frequency of the high-frequency power source 11 deviates from the resonant frequency to result in a reduction in the power transmission efficiency. In this embodiment, however, even if the resonant frequency of the resonant system changes due to load fluctuation during charging, the output frequency $f_o$ of the high-frequency power source 11 also changes, in response to the change in the resonant frequency, to lie within a range in which power transmission is performed efficiently. Power transmission is thus performed efficiently even under a large load fluctuation.

    (3) The power receiving equipment 30 is built in the vehicle and the vehicle includes the rectifier 32, the charger 33, and the battery 34 as the load. If the power receiving equipment 30 is thus built in the vehicle and the vehicle thus includes the battery 34 as the load, the resonant frequency of the resonant system may change due to an increased load fluctuation during power transmission and/or a state of the vehicle when stopped for power reception (charging). In this embodiment, however, even if the resonant frequency of the resonant system changes, the control means (CPU 19) changes the output frequency $f_o$ of the high-frequency power source 11 to achieve efficient power transmission.

Second Embodiment

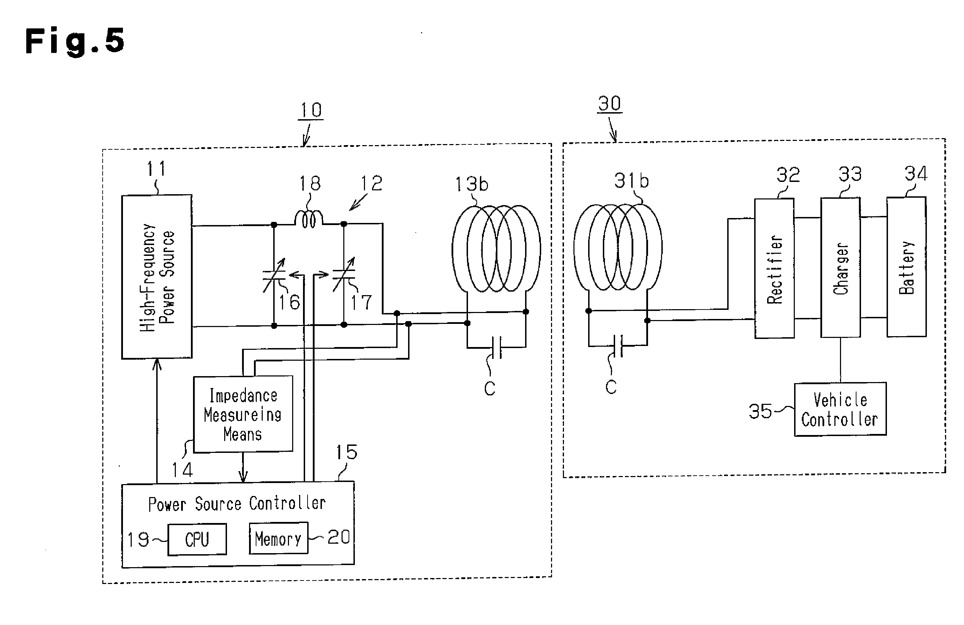

Next will be described a second embodiment of the present invention with reference to Figs. 5 to 7. The second embodiment is different from the above-described first embodiment in that only one coil is included in each of the power supply equipment 10 and the power receiving equipment 30 to constitute the resonant system. Components identical to those in the first embodiment are designated by the same reference numerals to omit the detailed description thereof.

As shown in Fig. 5, the primary resonance coil 13b is connected to the high-frequency power source 11 through the matching device 12. The secondary resonance coil 31 b is connected to the rectifier 32. That is, the primary coil 13 does not include a primary induction coil 13a but only the primary resonance coil 13b. The secondary coil 31 does not include a secondary induction coil 31 a but only the secondary resonance coil 31 b.

In this embodiment, upon charging the in-vehicle battery 34, the power source controller 15 and the vehicle controller 35 perform sequential control through steps similar to those in the first embodiment. High-frequency power is then output from the high-frequency power source 11 to the primary resonance coil 13b at the resonant frequency of the resonant system. The power is enhanced through the magnetic field resonance between the primary resonance coil 13b and the secondary resonance coil 31 b, and then AC power output from the secondary resonance coil 31 b is rectified through the rectifier 32, and thereafter the charger 33 charges the battery 34.

A support was found also for the case where the CPU 19 is capable of computing a range within which the resonant frequency of the resonant system lies based on a detection signal from the impedance measuring means 14, as is the case in the first embodiment, even in the modified configuration in which only one coil is included in each of the primary and secondary sides, as the primary resonance coil 13b and the secondary resonance coil 31 b, to constitute the resonant system of the resonance-type non-contact charging system.

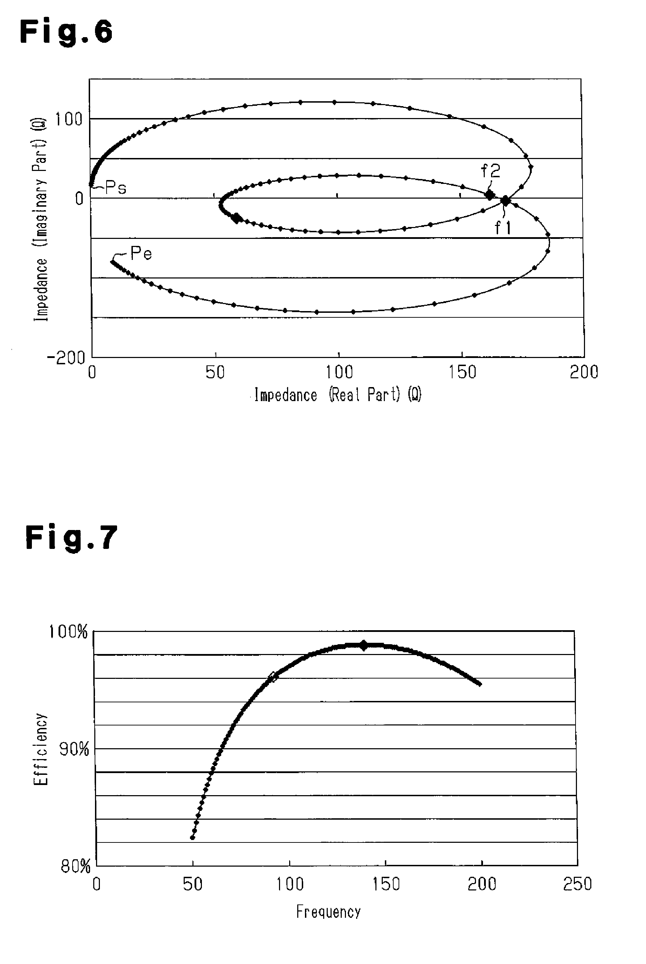

Specifically, an experiment was conducted similar to that in the first embodiment. The range of the output frequency of the high-frequency power source was set lower than example 1 in the first embodiment. Fig. 6 shows the relationship between the real part and the imaginary part of input impedances of a resonant system measured by changing the output frequency within the range from 50 to 200 kHz. In addition, in Fig. 6, the point Ps corresponds to an output frequency of 50 kHz and the point Pe corresponds to an output frequency of 200 kHz.

As shown in Fig. 6, the input impedance of the resonant system did not change monotonically with the increase in the output frequency of the high-frequency power source, but increased both in the real part and the imaginary part with the increase in the frequency within the range from 50 to 114 kHz, and then increased in the real part but decreased in the imaginary part with the increase in the frequency to 121 kHz. With the further increase in the frequency, the input impedance changed to decrease both in the real part and the imaginary part, decrease in the real part but increase in the imaginary part, increase both in the real part and the imaginary part, increase in the real part but decrease in the imaginary part, decrease both in the real part and the imaginary part, and decrease in the real part but increase in the imaginary part.

In Fig. 6, the input impedance $Z_1$ at the point $f_1$ is approximately equal to the input impedance Z2 at the point $f_2$.

$$f_1 = 123kHz, Z_1 = 168.57 + j2.49$$

$$f_2 = 171kHz, Z_2 = 162.0 + j4.12$$

$Z_1 = Z_2$ did not hold strictly because the data acquisition in the experiment was not fine, but acquiring data more finely than the 1 kHz interval for the increase in the output frequency of the high-frequency power source is predicted to result in that the lower one $f_1$ and the higher one $f_2$ of the frequencies corresponding to the intersection of the curve shown in Fig. 6 satisfy $Z_1 = Z_2$.

Fig. 7 shows a result of a measurement of the power transmission efficiency at different output frequencies of the high-frequency power source changed within the range from 50 to 200 kHz. From Fig. 7, the frequency of 140 kHz, at which the power transmission efficiency was maximized (98.80%) in the resonant system, was defined as the resonant frequency $f_o$ of the resonant system. The resonant frequency $f_o$ (140kHz) lay between $f_1$ (123kHz) and $f_2$ (171 kHz) to satisfy the relationship $f_1 \leq f_o \leq f_2$.

To confirm that no frequency at which the power transmission efficiency was maximized lay outside the range between $f_1$ and $f_2$, the power transmission efficiency was measured at different output frequencies of the high-frequency power source changed within the range from 50 to 200 kHz. As a result, it was confirmed that the frequency at which the power transmission efficiency was maximized lay only between $f_1$ and $f_2$.

This second embodiment basically offers the same advantages (1) to (4) in the first embodiment, and additionally the following advantage.

(5) Since only one coil is included in each of the power supply equipment 10 and the power receiving equipment 30 to constitute the resonant system, the size of the resonant system can be reduced, which facilitates securing a space for the power receiving equipment 30 to be built in the vehicle and increases the flexibility of the built-in position.

The present invention is not limited to the above-described embodiments, but may be modified as follows, for example.

The resonance-type non-contact power supply system does not necessarily require all of the primary induction coil 13a, the primary resonance coil 13b, the secondary induction coil 31 a, and the secondary resonance coil 31 b to provide non-contact power supply between the power supply equipment 10 and the power receiving equipment 30, but both the primary induction coil 13a and the secondary induction coil 31 a may be omitted as in the second embodiment. Alternatively, one of the primary induction coil 13a and the secondary induction coil 31 a may be omitted. However, the configuration including all of the primary induction coil 13a, the primary resonance coil 13b, the secondary induction coil 31 a, and the secondary resonance coil 31 b makes adjustment to a matching state more easily.

The power receiving equipment 30 may also be provided with a matching device. For example, the matching device may be provided between the secondary induction coil 31 a and the rectifier 32, and the vehicle controller 35 may adjust the matching device. If the two coils, that is, the primary resonance coil 13b and the secondary resonance coil 31 b are only provided in the resonant system as in the second embodiment, both the power supply equipment 10 and the power receiving equipment 30 are preferably provided with a matching device.

The matching device 12 may be provided only on the secondary side (in the power receiving equipment 30). Alternatively, the matching device 12 may be provided neither on the primary side (in the power supply equipment 10) nor on the secondary side (in the power receiving equipment 30).

Each of the primary side (the power supply equipment 10) and the secondary side (the power receiving equipment 30) may be provided with multiple matching devices 12.

The matching device 12 is not limited to the configuration of including the two variable capacitors 16 and 17 and the inductor 18, but, for example, may include a variable inductor as the inductor 18 or may include a variable inductor and two non-variable capacitors.

The matching device is not limited to the impedance-adjustable configuration, but may have a fixed impedance.

No matching device may be provided in the power supply equipment 10 or in the power receiving equipment 30. If the resonant frequency of the resonant system deviates, due to input impedance fluctuation of the resonant system, from a value when the output frequency $f_o$ is set by a predetermined amount or more at the start of proper power transmission, the deviation may be addressed only by setting the output frequency $f_o$ to correspond to the deviated resonant frequency.

A power factor corrector circuit (PFC circuit) may be provided instead of the matching device. In this case, phase-contrast measuring means (phase-contrast measuring section) is to be provided instead of the impedance measuring means 14.

The position to measure the impedance is not limited to that shown in Fig. 2, that is, to the position to measure the input impedance of the primary coil 13. The impedance at the input end of the matching device 12 may be measured, for example.

The rectifier 32 may be built in the charger 33.

The charger 33 may be omitted. Instead, the battery 34 may be charged directly with AC power output from the secondary coil 31 and rectified through the rectifier 32.

The power source section is not limited to the high-frequency power source 11 as long as it is configured to output AC, but may, for example, output AC power supplied from the commercial power supply with the frequency thereof being converted.

The mobile unit is not limited to such a vehicle that requires a driver, but may be an automated guided vehicle.

The resonance-type non-contact charging system is not limited to such a system for charging the in-vehicle battery 34 in a non-contact manner, but may be a system for charging a battery built in a mobile unit such as a vessel or a self-propelled robot or a battery built in a portable electronic device such as a mobile phone or a portable personal computer in a non-contact manner.

The resonance-type non-contact power supply system is not limited to such a resonance-type non-contact charging system, but may be applied to a system for supplying power to an electrical device built in a mobile unit such as a robot.

The resonance-type non-contact power supply system may be moved to a predefined work place by transfer means (transfer section) such as a conveyor that is driven without receiving non-contact power transmission but with common power, and the power receiving equipment 30 may be built in an apparatus including a motor to be driven with constant power as a load.

The diameters of the primary induction coil 13a and the secondary induction coil 31 a do not necessarily need to be equal to the diameters of the primary resonance coil 13b and the secondary resonance coil 31 b, but may be smaller or greater than these.

In the second embodiment, the primary resonance coil 13b and the secondary resonance coil 31b do not necessarily need to include multiple turns, but may include one turn.

The capacitors C connected to the primary resonance coil 13b and the secondary resonance coil 31b may be omitted. The configuration with the capacitors C, however, is capable of having a resonant frequency lower than that without the capacitors C. In addition, for the same resonant frequency, the size of the primary resonance coil 13b and the secondary resonance coil 31b can be reduced compared to the configuration without the capacitors C.

The following technical ideas (inventions) are obtainable from the above-described embodiments.

(1) In the invention according to any one of claims 1 to 4, a matching device is connected to the output power source of the power supply equipment.
(2) In the invention according to any one of claims 1 to 4 and the technical idea (1), the output frequency of the power source section meets the conditions of use allowed in the Radio Law.

## Claims

1. A resonance-type non-contact power supply system comprising:

   power supply equipment including a power source section and a primary resonance coil configured to be supplied with power from the power source section;
   power receiving equipment including a secondary resonance coil configured to receive power from the primary resonance coil by magnetic field resonance and a load configured to be supplied with power received at the secondary resonance coil, wherein
   at least the primary resonance coil, the secondary resonance coil, and the load constitute a resonant system, and
   the power source section is configured to be changeable in output frequency,
   the resonance-type non-contact power supply system further comprising:

   an impedance measuring means for measuring an input impedance of the resonant system; and
   a control means that performs control for transmitting proper power to the power receiving equipment after changing the output frequency $f_o$ of the power source section to lie within one of the frequency ranges $f_1 \leq f_o \leq f_2$, $f_3 \leq f_o \leq f_4$, $\cdots$, $f_{2n-1} \leq f_o \leq f_{2n}$, the frequencies $f_1, f_2, f_3, f_4, \cdots, f_{2n-1}, f_{2n}$ ($f_1 < f_2 < f_3 < \cdots < f_{2n-1} < f_{2n}$) are defined such that, if the input impedances of the resonant system at the time of supply of power of the frequencies $f_1, f_2, f_3, f_4, \cdots, f_{2n-1}, f2n$ ($f_1 < f_2 < f_3 < \cdots < f_{2n-1} < f_{2n}$) to the resonant system are represented by $Z_1, Z_2, Z_3, \cdots, Z_{2n-1}, Z2n$, the input impedances satisfy $Z_1 = Z_2$, $Z_3 = Z_4$, $\cdots$, $Z_{2n-1} = Z_{2n}$.

2. The resonance-type non-contact power supply system according to claim 1, wherein
at least one of the power supply equipment and the power receiving equipment is provided with an induction coil configured to supply power received from the power source section to the primary resonance coil by electromagnetic induction or with an induction coil configured to draw power received at the secondary resonance coil by electromagnetic induction, and
at least the induction coil, the primary resonance coil, the secondary resonance coil, and the load constitute the resonant system.

3. The resonance-type non-contact power supply system according to claim 1 or 2, wherein the control means is configured to perform control in which the control means determines the frequencies $f_1$, $f_2$, $f_3$, $\cdots$, $f_{2n-1}$, $f2n$ ($f_1 < f_2 < f_3 < \cdots < f_{2n-1} < f_{2n}$) prior to the proper power transmission from the power supply equipment,

based on the result of the determination, the control means selects one of the frequency ranges $f_1 \leq f_o \leq f_2$, $f_3 \leq f_o \leq f_4$, $\cdots$, $f_{2n-1} \leq f_o \leq f_{2n}$ for the output frequency $f_o$ of the power source section to lie within and accordingly changes the output frequency of the power source section, and

the control means starts the proper power transmission,

thereafter, based on the result of a measurement by the impedance measuring means, the control means determines whether or not the output frequency $f_o$ deviates from the selected range,

if the frequency deviates, the control means determines frequencies $f_{1'}$, $f_{2'}$, $f_{3'}$, $\cdots$, $f_{2n-1'}$, $f_{2n'}$ ($f_{1'} < f_{2'} < f_{3'} < \cdots < f_{2n-1'} < f_{2n'}$),

based on the result of the determination, the control means selects one of the frequency ranges $f_{1'} \leq f_o \leq f_{2'}$, $f_{3'} \leq f_o \leq f_{4'}$, $\cdots$, $f_{2n-1'} \leq f_o f_{2n'}$ for the output frequency $f_o$ of the power source section to lie within, accordingly changes the output frequency of the power source section, and then performs the proper power transmission, and

the frequencies $f_1$, $f_{2'}$, $f_{3'}$, $\cdots$, $f_{2n-1'}$, $f_{2n'}$ are defined such that, if the input impedances of the resonant system at the time of supply of power of the frequencies $f_{1'}$, $f_{2'}$, $f_{3'}$, $\cdots$, $f_{2n-1'}$, $f_{2n'}$ to the resonant system are represented by $Z_{1'}$, $Z_{2'}$, $Z_{3'}$, $\cdots$, $Z_{2n-1'}$, $Z_{2n'}$, the input impedances satisfy $Z_{1'} = Z_{2'}$, $Z_{3'} = Z_{4'}$, $\cdots$, $Z_{2n-1'} = Z_{2n'}$.

4. The resonance-type non-contact power supply system according to any one of claims 1 to 3, wherein the power receiving equipment is built in a vehicle and the vehicle includes a rectifier and a battery as the load.

# Fig.1

EP 2 722 967 A1

# Fig.2

# Fig.3

# Fig.4

# Fig.5

EP 2 722 967 A1

# Fig.6

# Fig.7

**INTERNATIONAL SEARCH REPORT**

| International application No. |
| --- |
| PCT/JP2012/062179 |

A.   CLASSIFICATION OF SUBJECT MATTER
*H02J17/00*(2006.01)i, *B60L5/00*(2006.01)i, *B60L11/18*(2006.01)i, *B60M7/00*
*(2006.01)i, H01M10/46*(2006.01)i, *H02J7/00*(2006.01)i

According to International Patent Classification (IPC) or to both national classification and IPC

B.   FIELDS SEARCHED

Minimum documentation searched (classification system followed by classification symbols)
H02J17/00, B60L5/00, B60L11/18, B60M7/00, H01M10/46, H02J7/00

Documentation searched other than minimum documentation to the extent that such documents are included in the fields searched
Jitsuyo Shinan Koho          1922-1996     Jitsuyo Shinan Toroku Koho     1996-2012
Kokai Jitsuyo Shinan Koho    1971-2012     Toroku Jitsuyo Shinan Koho     1994-2012

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | Takehiro IMURA, Hiroyuki OKABE, Toshiyuki UCHIDA, Yoichi HORI, "Study of Magnetic and Electric Coupling for Contactless Power Transfer Using Equivalent Circuits", IEEJ Transactions on Industry Applications, Dengakuron D, vol.130, no.1, the Institute of Electrical Engineers of Japan, 2010.01, pages 84 to 88 | 1-4 |
| Y | JP 2010-41558 A  (Yokohama National University), 18 February 2010 (18.02.2010), fig. 5 (Family: none) | 1-4 |

☒  Further documents are listed in the continuation of Box C.          ☐  See patent family annex.

*   Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search 28 May, 2012 (28.05.12) | Date of mailing of the international search report 05 June, 2012 (05.06.12) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/062179

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-184526 A  (NTT Docomo Inc.),<br>07 July 2005 (07.07.2005),<br>fig. 3, 4<br>(Family: none) | 1-4 |

Form PCT/ISA/210 (continuation of second sheet) (July 2009)

**EP 2 722 967 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007008646 A

- JP 2010114964 A